(19) **Europäisches Patentamt**

**European Patent Office**

**Office européen des brevets**

(11) **EP 1 643 702 A2**

(12) **EUROPEAN PATENT APPLICATION**

(43) Date of publication:
**05.04.2006 Bulletin 2006/14**

(51) Int Cl.:
**H04L 25/02** *(2006.01)*   **H04L 27/26** *(2006.01)*

(21) Application number: **05020824.8**

(22) Date of filing: **23.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **24.09.2004 KR 2004077173**

(71) Applicant: **Samsung Electronics Co., Ltd.**
**Suwon-si, Gyeonggi-Do (KR)**

(72) Inventors:
• **Park, Min-Cheol**
**Yeongtong-gu**
**Suwon-si**
**Gyeonggi-do (KR)**

• **Kim, In-Hyoung**
**Yeongtong-gu**
**Suwon-si**
**Gyeonggi-do (KR)**
• **Song, Bong-Gee**
**Yeongtong-gu**
**Suwon-si**
**Gyeonggi-do (KR)**
• **Chang, Jae-Hwan**
**Yeongtong-gu**
**Suwon-si**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Apparatus and method for estimating delay spread of multi-path fading channel in wireless communication system**

(57)    Disclosed are an apparatus and method that can estimate the maximum delay spread by means of simple computation while being robust against SNR (Signal-to-Noise Ratio) variations. A standard deviation value of a noise component is produced from time-domain signal values obtained from a received signal. The time-domain signal values corresponding to preset sampling points are compared with a threshold value designated by the standard deviation value. A delay time of a time index that corresponds to a time-domain signal value equal to or larger than the threshold value and simultaneously is the maximum time index among time indexes respectively corresponding to the sampling points is detected to be a maximum delay spread value.

FIG.1

EP 1 643 702 A2

**Description**

The present invention relates generally to a wireless communication system, and more particularly to an apparatus and method for estimating delay spread of a multi-path fading channel.

Conventionally, signal propagation through a radio channel causes various types of impairment in a received signal. One important type of propagation impairment in a received signal is delay spread caused by time delay of a signal propagated through multiple paths. A channel which experiences delay spread due to multiple paths is referred to as a multi-path fading channel. The delay spread brings about interference between different delay versions of the same symbol reaching from different paths with varying delay intervals.

To compensate for channel distortion of a received signal, an equalizer can to be used. For example, a wireless OFDM/OFDMA (Orthogonal Frequency Division Multiplexing/Orthogonal Frequency Division Multiple Access) system requires an equalizer based on a frequency domain to compensate for channel distortion of a received symbol. In a wireless OFDM/OFDMA receiver, a channel estimator estimates characteristics of a channel through which a signal is transmitted. Using an estimated channel value, the equalizer compensates for the distortion of a data symbol. Channel value means a channel impulse response.

Conventionally, the channel estimator estimates the channel value through channel interpolation using a received preamble or midamble. The channel interpolation uses an interpolation filter such as a Wiener filter, and requires the maximum delay spread value to model the interpolation filter weight. Maximum delay spread value means the maximum delay spread time, that is, a delay spread time in which the last delayed and received channel value is present in the multi-path fading channel.

Techniques for estimating the maximum delay spread include an SEE (Signal Energy Estimation) algorithm, a delay spread estimation scheme based on a CP (Cyclic Prefix), etc.

The SEE algorithm is a method for deciding a delay spread value on the basis of an estimated channel value. The estimated channel value is modeled in a manner in which noise is added to an ideal channel value. When the total power of only a noise component is subtracted from that of a received signal, the total power of a channel component from which the effect of the noise component is eliminated is produced. Here, when the power during an interval in which channel information is absent in a received channel is measured and scaled, the total power of only the noise component can be approximated. While the channel power is accumulated between the first time index and the following time index on the basis of the total power of the channel component, a determination is made as to whether an accumulation amount exceeds a predetermined range of total channel power. When the accumulation amount is calculated, average noise power is removed from the received signal at each time index. The time indexes correspond to predetermined sampling points. If an accumulation amount exceeds a predetermined range of the total channel power, then the time index is determined to be the maximum delay spread.

In the above-described SEE algorithm, the performance of estimating delay spread varies abruptly according to a variation in a received SNR (Signal-to-Noise Ratio). That is, the estimation performance is good in high SNR environments, but is bad in low SNR environments. Because the power of the noise component buries the power of the signal component when the power of the noise component is high in the received signal, it is difficult for a signal to be detected.

The CP-based delay spread estimation scheme has good performance in the low SNR as compared with the SEE algorithm. However, because the CP-based estimation scheme uses a Viterbi algorithm, computational complexity is relatively high.

Accordingly, it is the object of the present invention to provide an apparatus and method that can estimate the maximum delay spread by means of simple computation while being robust against SNR (Signal-to-Noise Ratio) variations.

This object is solved by the subject matter of the independent claims.

Preferred embodiments are defined in the dependent claims.

In accordance with an aspect of the present invention, there is provided an apparatus and method for estimating maximum delay spread, including producing a standard deviation value of a noise component from time-domain signal values obtained from a received signal; comparing the time-domain signal values corresponding to preset sampling points with a threshold value designated by the standard deviation value; and detecting, as a maximum delay spread value, a delay time of a time index that corresponds to a time-domain signal value which is equal to, or greater than, the threshold value and which is simultaneously is a maximum time index among time indexes respectively corresponding to the sampling points.

In accordance with an aspect of the present invention, there is provided an apparatus and method for estimating maximum delay spread, including producing a standard deviation value of a noise component from time-domain signal values obtained from a received signal; comparing a time-domain signal value in each time index with a threshold value designated by the standard deviation value while decrementing a time index value from a preset time index of time indexes respectively corresponding to sampling points; and detecting, as a maximum delay spread value, a delay time corresponding to one of the time indexes in which a time-domain signal value equal to or greater than the threshold value appears first.

The present invention will be more clearly understood from the following detailed description taken in conjunction with the accompanying drawings, in which:

FIG. 1 is a block diagram illustrating an embodiment of a channel estimator including a delay spread estimation part in accordance with the present invention;

FIG. 2 is a block diagram illustrating an embodiment of the delay spread estimation part in accordance with the present invention;

FIG. 3 is a flow chart illustrating an embodiment of a delay spread estimation process in accordance with the present invention;

FIG. 4 is an illustration showing delay spread of a multi-path fading channel; and

FIGS. 5 to 8 are graphs illustrating simulation results of a performance comparison in accordance with the present invention.

Preferred embodiments of the present invention will be described in detail herein below with reference to the annexed drawings. In the following description, a detailed description of known functions and configurations incorporated herein will be omitted when it may obscure the subject matter of the present invention.

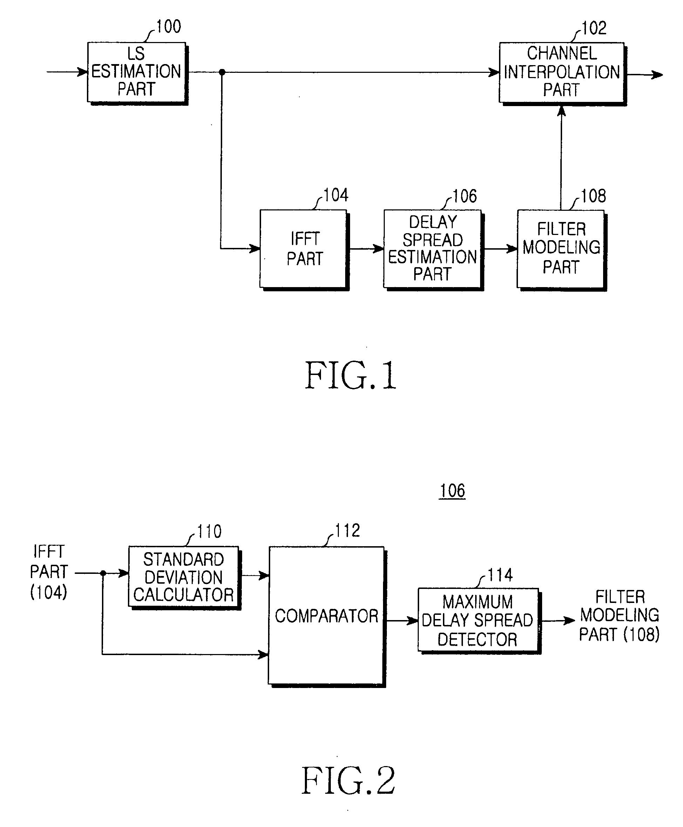

FIG. 1 is a block diagram illustrating an embodiment of a channel estimator including a delay spread estimation part in accordance with the present invention, and illustrates an example in which the delay spread estimation part 106 is applied to a channel estimator provided in an OFDM/OFDMA (Orthogonal Frequency Division Multiplexing/Orthogonal Frequency Division Multiple Access) receiver. A received OFDM signal undergoes an FFT (Fast Fourier Transform) operation of an FFT part (not shown), and a result of the FFT operation is inputted into an LS (Least Square) estimation part 100. A signal inputted into the LS estimation part 100 undergoes LS estimation. The LS estimation part 100 provides an LS-estimated signal to a channel interpolation part 102 and an IFFT (Inverse Fast Fourier Transform) part 104.

The LS-estimated signal inputted into the IFFT part 104 undergoes an IFFT operation, and a result of the IFFT operation is expressed by a time-domain signal. Time-domain signal values are inputted into the delay spread estimation part 106. A time-domain signal value indicates a power value of the time-domain signal. In response to the time-domain signal values, the delay spread estimation part 106 estimates the maximum delay spread. A value of the estimated maximum delay spread is provided to a filter modeling part 108. The filter modeling part 108 provides the channel interpolation part 102 with an interpolation filter weight corresponding to the maximum delay spread value estimated by the delay spread estimation part 106. Then, the channel interpolation part 102 performs a channel interpolation operation on the LS-estimated signal provided by the LS estimation part 100 through an interpolation filter using the interpolation filter weight provided by the filter modeling part 108, such that channel estimation is carried out.

The delay spread estimation part 106 estimates the maximum delay spread on the basis of a channel value estimated from the received signal. The estimated channel value is modeled in the form of a sum of a channel value serving as a signal component and white Gaussian noise serving as a noise component as shown in the following Equation 1.

$$\widetilde{h}(n) = h(n) + e(n) \qquad \underline{\text{Equation (1)}}$$

In the above Equation 1, $\widetilde{h}(n)$ is an estimated channel value serving as a channel impulse response estimated from the received signal, $h(n)$ is a channel value of a signal component serving as an original channel impulse response, $e(n)$ is a noise component, and n is a time index.

Two hypotheses can be made based on the above-described model. The first hypothesis is that a signal is expressed by only the noise component as in the following Equation 2, and the second hypothesis is a signal is expressed by a sum of the noise component and the channel value as in the above Equation 1. That is, the first hypothesis is a case where only noise is present in the received signal, and the second hypothesis is a case where the channel value and the noise are present in the received signal.

$$\widetilde{h}(n) = e(n) \qquad \underline{\text{Equation (2)}}$$

In the above Equation 2, $\widetilde{h}(n)$ is an estimated channel value, $e(n)$ is a noise component, and n is a time index.

The time-domain signal value inputted from the IFFT part 104 to the delay spread estimation part 106 can be expressed by the following Equation 3.

$$\tilde{h}(n) = IFFT\{\tilde{H}(f)\} = h(n) + e(n)$$  Equation (3)

where, $\tilde{h}(n)$ is an estimated channel value from a received signal, $h(n)$ is a channel value of a signal component, $e(n)$ is a noise component, and n is a time index.

When the estimated channel value $\tilde{h}(n)$ is modeled as power, that is, magnitude, it can be expressed by the following Equation 4.

$$\left|\tilde{h}(n)\right| = \left|h(n) + e(n)\right|$$  Equation (4)

Because the noise component $e(n)$ is a Gaussian distributed random variable, its power value forms Rayleigh distribution when the first hypothesis (Equation 2) is satisfied.

When the second hypothesis is satisfied in accordance with the embodiment of the present invention, it is determined that a channel is present. In this case, a delay spread value is determined using a time value. The largest value of delay spread values is determined to be the maximum delay spread value. This can be expressed by the following Equation 5. A threshold value serving as a reference value necessary to determine the presence of a channel is different according to characteristics of the distribution of the first hypothesis, and is defined on the basis of the standard deviation of only the noise component.

$$\tilde{M}_{max} = \max_{\tilde{M}}\{\tilde{M} \mid \left|\tilde{h}(\tilde{M})\right| \geq \kappa * \hat{\sigma}_{|e|}\}$$  Equation (5)

In the above Equation 5, $M_{max}$ is a time index corresponding to the maximum delay spread value, $\tilde{M}$ is an $M^{th}$ time index, $|\tilde{h}\tilde{M}|$ is a power value expressed by magnitude serving as a time-domain signal value at the $M^{th}$ time index, $\hat{\sigma}_{|e|}$ is a standard deviation value of the noise component, $k * \hat{\sigma}_{|e|}$ is a threshold value serving as a reference value necessary to determine the presence of a channel, $k$ serves as a factor associated with the reliability of a normal Rayleigh distribution and is obtained by $\sqrt{\dfrac{\pi}{2}} + F^{-1}(\alpha)$, where $F^{-1}(\alpha)$ is an inverse CDF (Cumulative Distribution Function) of the normal Rayleigh distribution. That is,

$$F(x) = \int_0^x t e^{-\frac{t^2}{2}} dt = \alpha ,$$

where $\alpha$ is the reliability of the normal Rayleigh distribution.

The standard deviation value of the noise component, that is, $\hat{\sigma}_{|e|}$, is obtained by the following Equation 6.

$$\hat{\sigma}_{|e|} = \sqrt{E\{\left|e(n)\right|^2\} - E^2\{\left|e(n)\right|\}}$$  Equation (6)

In the above Equation 6, $e(n)$ is a noise component, n is a time index, a range of n is $L \leq n \leq N,$ a range of $L$ is $M \leq L \leq N$, $M$ is maximum channel order of a channel capable of being generated, and $N$ is an FFT size.

Here, the value of L must be decided so that probability distribution of the noise component can be maximally approximated. In other words, as the range of n is increased, so does the accuracy of a probability distribution approximation value associated with the standard deviation value $\hat{\sigma}_{|e|}$ of the noise component. Consequently, the increased range of *n* affects overall performance. The standard deviation value $\hat{\sigma}_{|e|}$ of the noise component must be decided using samples in a maximum range and e is an operator indicating an expectation

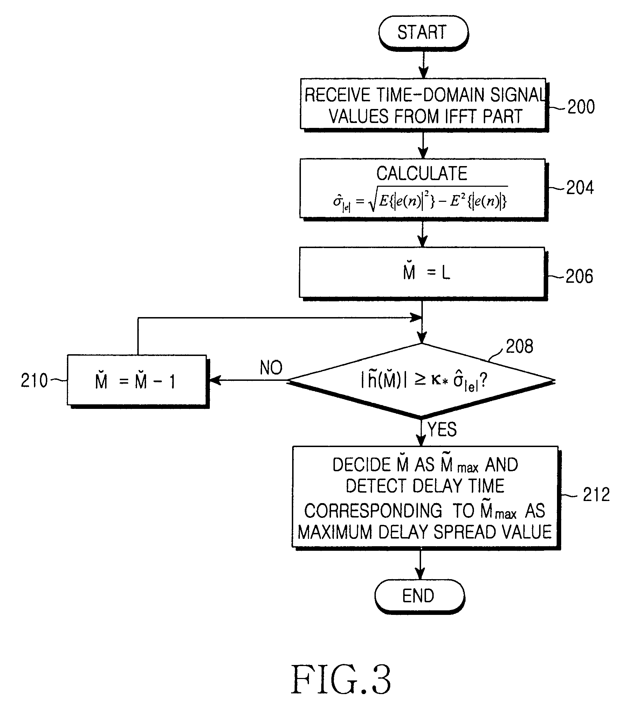

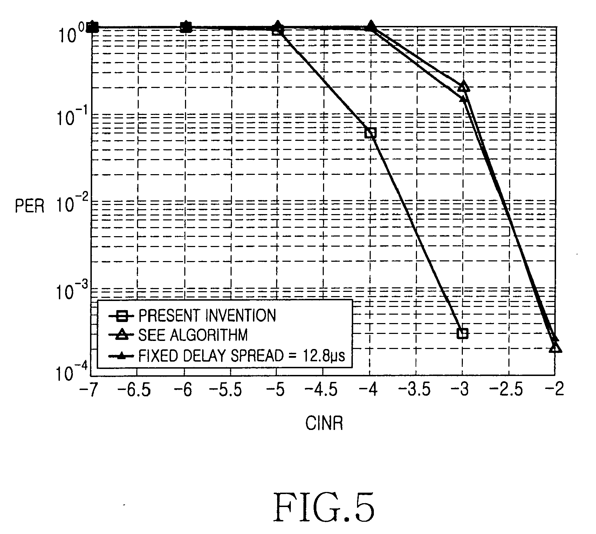

FIG. 2 is a block diagram illustrating an embodiment of the delay spread estimation part 106 in accordance with the present invention. The delay spread estimation part 106 includes a standard deviation calculator 110, a comparator 112, and a maximum delay spread detector 114. The standard deviation calculator 110 receives time-domain signal values from the IFFT part 104, produces a standard deviation value $\hat{\sigma}_{|e|}$ of a noise component in the above Equation 6, and provides the produced standard deviation value $\hat{\sigma}_{|e|}$ to the comparator 112. Then, the comparator 112 compares a threshold value based on the standard deviation value $\hat{\sigma}_{|e|}$ of the noise component shown in FIG. 3, that is, $k*\hat{\sigma}_{|e|}$ in the above equation 5, with a time-domain signal value at each sampling point. As illustrated in FIG. 5, when $|\tilde{h}(\breve{M})|$ is equal to or larger than the threshold value $k*\hat{\sigma}_{|e|}$ (e.g., see step 208 of FIG. 3) proportional to the standard deviation value $\hat{\sigma}_{|e|}$ of the noise component, the comparator 112 determines a result of the comparison as delay spread in which a channel value is present in a corresponding time index. The maximum delay spread detector 114 detects the maximum delay spread value according to the result of the comparison of the comparator 112 as illustrated in FIG. 3, and detects the largest value of delay spread values as the maximum delay spread value.

FIG. 3 shows a flow chart illustrating the delay spread estimation process according to an embodiment of the present invention. The delay spread estimation part 106 receives time-domain signal values from the IFFT part 104 at step 200. At step 204, the standard deviation calculator 110 calculates a standard deviation value $\sigma_{|e|}$ of a noise component from the time-domain signal values using Equation 6.

Then, the comparator 112 sets the time index $\breve{M}$ to L at step 206. Subsequently, until a time-domain signal value $|\tilde{h}(\breve{M})|$ is equal to or larger than a threshold value $k*\hat{\sigma}_{|e|}$, the comparator 112 compares a time-domain signal value $|\tilde{h}(\breve{M})|$ in a corresponding time index $\breve{M}$ with the threshold value $k*\hat{\sigma}_{|e|}$ while decrementing the time index $\breve{M}$ by one, at steps 208 to 210. Because the value L is set in a range of $M \leq L \leq N$, that is, a range between maximum channel order and an FFT size, a time index in which the time-domain signal value $|\tilde{h}(\breve{M})|$ is equal to or greater than the threshold value $k*\hat{\sigma}_{|e|}$ appears first is detected while a time index value is incremented by one from an Lth time index. Here, the time index value is moved from a large value to a small value. The detected time index $\breve{M}$ becomes the maximum delay-spread time index with the largest delay spread.

When the time-domain signal value $|\tilde{h}(\breve{M})|$ is equal to or larger than the threshold value $k*\hat{\sigma}_{|e|}$ at steps 208 and 210, the maximum delay spread detector 114 decides, as the maximum delay-spread time index $M_{max}$, the time index $\breve{M}$ in which the time-domain signal value $|\tilde{h}(\breve{M})|$ is equal to or larger than the threshold value $k*\hat{\sigma}_{|e|}$, thereby detecting a delay time corresponding to the maximum delay-spread time index $\tilde{M}_{max}$ as the maximum delay spread value.

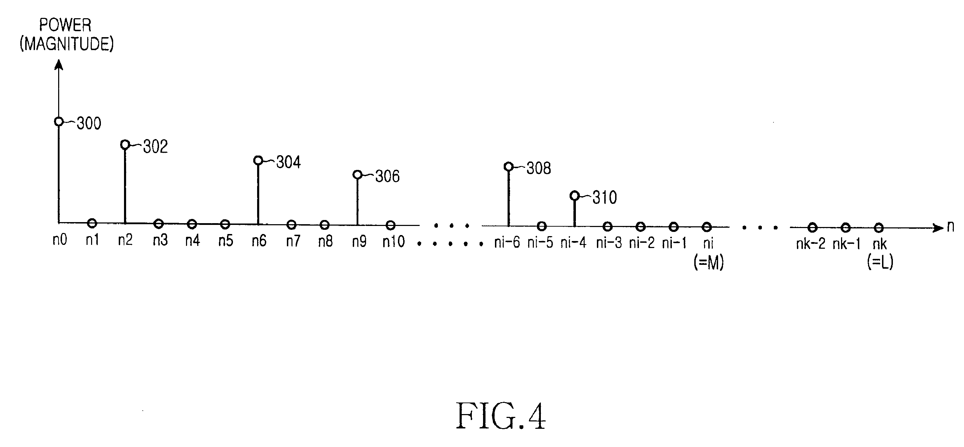

FIG. 4 illustrates an example of corresponding delay spread of a multi-path fading channel to signal power values and time indexes so the present invention can be better understood. As illustrated in FIG. 4, when channel impulse responses 300 to 310 that correspond to the time-domain signal value $|\tilde{h}(\breve{M})|$ which is equal to or greater than the threshold value $k*\hat{\sigma}_{|e|}$ in time indexes n0, n1, ..., ni-1, ni, ..., nk-1, nk corresponding to sampling points, the delay spread estimation part 106 detects, as the maximum delay spread value, a delay spread value (which corresponds with the channel impulse response 310) in which a delay time is largest from among delay spread values. When it is assumed that a time index corresponds to the maximum channel order M is a time index ni and a time index corresponds to a value L is a time index nk as illustrated in FIG. 4, the time-domain signal value $|\tilde{h}(\breve{M})|$ is compared with the threshold value $k*\hat{\sigma}_{|e|}$ while a time index value is decremented by one from the time index nk at steps 206 to 212. The time index ni-4 in which the time-domain signal value $|\tilde{h}(\breve{M})|$ equal to or greater than the threshold value $k*\hat{\sigma}_{|e|}$ appears first is determined to be the maximum delay-spread time index, such that a delay time corresponding to the time index ni-4 is detected to be the maximum delay spread value.

Alternatively, the comparator 112 can compare the time-domain signal value $|\tilde{h}(\breve{M})|$ and the threshold value

$k^*\hat{\sigma}_{|e|}$ while incrementing the time index M from the first time index n0 by one, and the maximum delay spread detector 114 can detect time indexes corresponding to the time-domain signal value $|\tilde{h}(\check{\boldsymbol{M}})|$ equal to or greater than the threshold value $k^*\hat{\sigma}_{|e|}$ such that a delay time corresponding to the largest time index among the detected time indexes can be decided as the maximum delay spread value. That is, the time indexes n0, n2, n6, n9, ..., ni-6, ni-4 corresponding to the channel impulse responses 300 to 310, that is, the delay spread values, are detected, and a delay spread value corresponding to the time index ni-4 among the detected time indexes can be determined to the largest delay spread value.

In this case, a comparison operation must be performed in a state in which the detected delay spread values, that is, time indexes corresponding to the time-domain signal value $|\tilde{h}(\check{\boldsymbol{M}})|$ equal to or greater than the threshold value $k^*\hat{\sigma}_{|e|}$, or delay spread values corresponding thereto, are stored. Therefore, a predetermined memory space and additional computation are required.

The maximum delay spread detector 114 provided in the delay spread estimation part 106 provides the filter modeling part 108 with the maximum delay spread value corresponding to the detected maximum delay-spread time index $\tilde{M}_{max}$. At this time, the maximum delay spread detector 114 provides the filter modeling part 108 with the maximum delay spread value by multiplying a sampling cycle, that is, a time period between two time indexes, by the maximum delay-spread time index $\tilde{M}_{max}$.

In accordance with an embodiment of the present invention, a time-domain signal value is compared with a threshold value serving as a value based on a standard deviation of a noise component, the presence of a channel value is detected, and the maximum delay spread is estimated from delay spread values associated with signal values equal to or greater than the threshold value. It can be seen that the above-described process is computationally simple as compared with a CP (Cyclic Prefix)-based delay spread estimation scheme using the Viterbi algorithm.

As illustrated in FIGS. 5 to 8, as compared with an SEE (Signal Energy Estimation) algorithm, the maximum delay spread estimation in accordance with the present invention has uniform performance when an SNR (Signal-to-Noise Ratio) varies, if it is assumed that the amount of computation of the present invention is the same as that of the SEE algorithm. FIGS. 5 to 8 illustrate simulation results based on performance comparison when a channel characteristic value is estimated by performing channel interpolation using an interpolation filter weight on the basis of the maximum delay spread estimated according to the present invention, the maximum delay spread estimated according to the SEE algorithm and fixed delay spread in the case where a CINR (Carrier to Interference Noise Ratio) is varied. The fixed delay spread uses the maximum delay spread fixed to 12.8 $\mu$s. According to the fixed delay spread, the maximum delay spread estimation is not used. The results illustrated in FIGS. 5 to 8 are obtained when the threshold value $k^*\hat{\sigma}_{|e|}$ is designated on the basis of the reliability of normal Rayleigh distribution, $\alpha$ = 99.995%.

FIG. 5 illustrates a PER (Packet Error Rate) associated with a CINR at a speed of 3 km/h in the ITU (International Telecommunication Union) pedestrian B model when a modulation and coding rate are QPSK (Quadrature Phase Shift Keying) 1/12 in a wireless OFDM system.

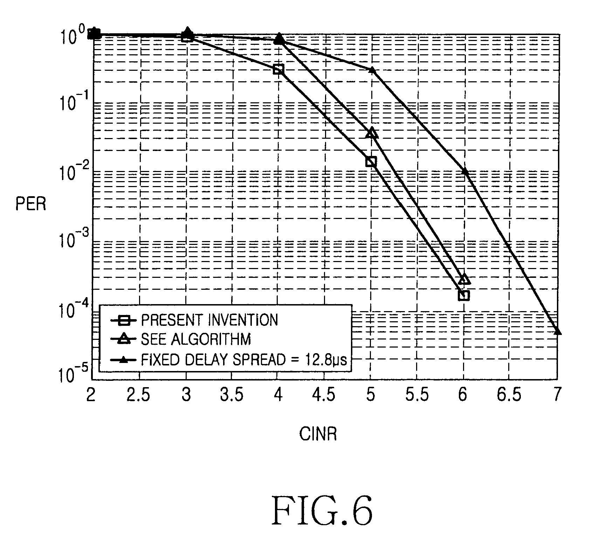

FIG. 6 illustrates a PER associated with a CINR at a speed of 3 km/h in the ITU pedestrian B model when a modulation and coding rate are QPSK 1/2 in a wireless OFDM system.

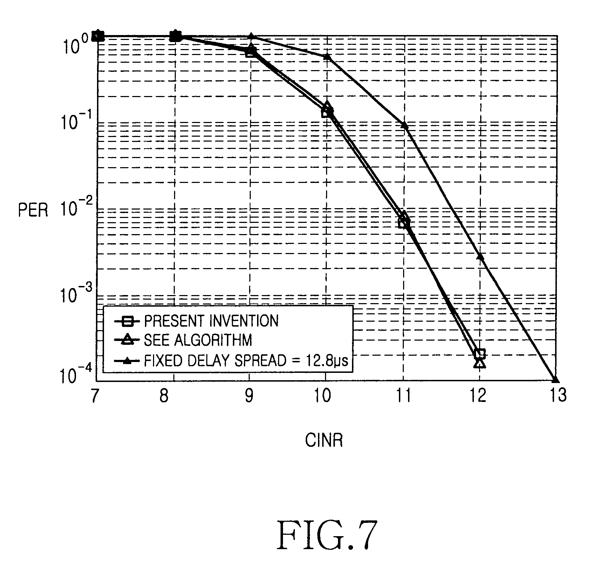

FIG. 7 illustrates a PER associated with a CINR at a speed of 3 km/h in the ITU pedestrian B model when a modulation and coding rate are 16-QAM (Quadrature Amplitude Modulation) 1/2 in a wireless OFDM system.

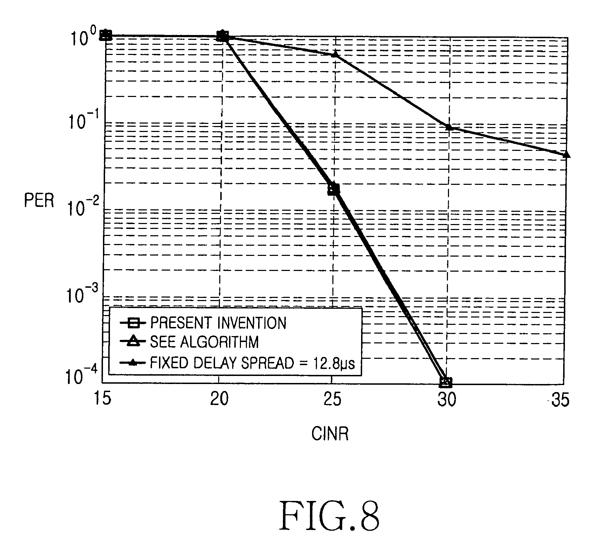

FIG. 8 illustrates a PER associated with a CINR at a speed of 3 km/h in the ITU pedestrian B model when a modulation and coding rate are 64-QAM 1/2 in a wireless OFDM system.

As illustrated in FIGS. 5 to 8, when a target PER is $10^{-2}$, it can be seen that the maximum delay spread estimation in accordance with the present invention has a performance improvement of 0.8 dB or more as compared with the case where the maximum delay spread is fixed to 12.8 $\mu$s. As illustrated in FIGS. 5 and 6, the SEE algorithm has serious performance degradation in a low SNR environment, while the maximum delay spread estimation in accordance with the present invention has uniform performance in the overall range even though an SNR varies.

As described above, the present invention can perform the maximum delay spread estimation robust against SNR variations on the basis of a standard deviation of a noise component while performing simple computation as compared with the CP-based delay spread estimation scheme using the Viterbi algorithm.

The filter modeling part 108 refers to the maximum delay spread value estimated by the delay spread estimation part 106 and generates interpolation filter weights which are adaptive to a channel variation to provide the generated interpolation filter weight to the channel interpolation part 102, such that the reception performance which is robust against the channel variation can be obtained. Moreover, the filter modeling part 108 can be implemented to refer to the maximum delay spread value estimated by the delay spread estimation part 106 and adaptively compute the interpolation filter weight. To reduce the computational complexity, the filter modeling part 108 can be implemented to classify maximum delay spread values according to ranges, produce filter weight sets in advance, select a filter weight set based on an estimated maximum delay spread value, and provide the selected filter weight set to the channel interpolation part 102.

Although preferred embodiments of the present invention have been disclosed for illustrative purposes, those skilled in the art will appreciate that various modifications, additions and substitutions are possible, without departing from the scope of the present invention.

In particular, an embodiment of the present invention applied to an OFDM/OFDMA system has been described, but the present invention can be applied to any wireless communication system requiring maximum delay spread estimation. An example of applying maximum delay spread estimation to channel interpolation for channel estimation has been described. The maximum delay spread estimated in accordance with an embodiment of the present invention can be used to determine frequency selectivity of a multi-path fading channel. That is, the multi-path fading channel has characteristics in which frequency selectivity increases on a frequency domain as the maximum delay spread increases. Therefore, the frequency selectivity of a multi-path fading channel can be determined on the basis of the maximum delay spread estimated in accordance with an embodiment of the present invention. Moreover, the maximum delay spread estimated in accordance with an embodiment of the present invention can be used to identify channel characteristics in a CINR (Carrier to Interference Noise Ratio) measurement.

Therefore, the present invention is not limited to the above-described embodiments, but the present invention is defined by the following claims.

**Claims**

1. An apparatus for estimating delay spread of a multi-path fading channel in a wireless communication system, comprising:

   a standard deviation calculator for producing a standard deviation value of a noise component from time-domain signal values obtained from a received signal;
   a comparator for comparing the time-domain signal values corresponding to preset sampling points with a threshold value designated by the standard deviation value; and
   a maximum delay spread detector for detecting, as a maximum delay spread value, a delay time of a time index that corresponds to a time-domain signal value equal to or greater than the threshold value and which simultaneously is a maximum time index from among all time indexes respectively corresponding to the sampling points.

2. The apparatus of claim 1, wherein the threshold value is proportional to the standard deviation value according to an inverse CDF, Cumulative Distribution Function, of a normal Rayleigh distribution.

3. The apparatus of claim 1 or 2, wherein the time-domain signal value is a power value obtained by performing an IFFT, Inverse Fast Fourier Transform, operation on a received OFDM, Orthogonal Frequency Division Multiplexing, signal after LS, Least Square, estimation.

4. The apparatus of one of claims 1 to 3, wherein the standard deviation value is $\hat{\sigma}_{|e|} = \sqrt{E\{|e(n)|^2\} - E^2\{|e(n)|\}}$,

   where $e(n)$ is the noise component, n is the time index, a range of n is $L \le n \le N$, a range of $L$ is $M \le L \le N$, $M$ is a maximum channel order of a channel capable of being generated, and N is an FFT, Fast Fourier Transform, size.

5. An apparatus for estimating delay spread of a multi-path fading channel in a wireless communication system, comprising:

   a standard deviation calculator for producing a standard deviation value of a noise component from time-domain signal values obtained from a received signal;
   a comparator for comparing a time-domain signal value in each time index with a threshold value designated by the standard deviation value while decrementing a time index value from a preset time index of time indexes respectively corresponding to sampling points; and
   a maximum delay spread detector for detecting, as a maximum delay spread value, a delay time corresponding to one of the time indexes in which a time-domain signal value equal to or greater than the threshold value appears first.

6. The apparatus of claim 5, wherein the threshold value is proportional to the standard deviation value according to an inverse CDF, Cumulative Distribution Function, of normal Rayleigh distribution.

7. The apparatus of claim 5 or 6, wherein the preset time index corresponds to a sampling point included in a time domain in which no channel value is present.

8. The apparatus of one of claims 5 to 7, wherein the time-domain signal value is a power value obtained by performing an IFFT, Inverse Fast Fourier Transform, operation on a received OFDM, Orthogonal Frequency Division Multiplexing, signal after LS, Least Square, estimation.

9. The apparatus of one of claims 5 to 8, wherein the standard deviation value is $\hat{\sigma}_{|e|} = \sqrt{E\{|e(n)|^2\} - E^2\{|e(n)|\}}$ ,

where $e(n)$ is the noise component, n is the time index, a range of n is $L \le n \le N$, a range of $L$ is $M \le L \le N$, $M$ is a maximum channel order of a channel capable of being generated, and $N$ is an FFT, Fast Fourier Transform, size.

10. A method for estimating delay spread of a multi-path fading channel in a wireless communication system, comprising:

producing a standard deviation value of a noise component from time-domain signal values obtained from a received signal;
comparing the time-domain signal values corresponding to preset sampling points with a threshold value designated by the standard deviation value; and
detecting, as a maximum delay spread value, a delay time of a time index that corresponds to a time-domain signal value equal to or greater than the threshold value and which simultaneously is a maximum time index among time indexes respectively corresponding to the sampling points.

11. The method of claim 10, wherein the threshold value is proportional to the standard deviation value according to an inverse CDF, Cumulative Distribution Function, of a normal Rayleigh distribution.

12. The method of claim 10 or 11, wherein the time-domain signal value is a power value obtained by performing an IFFT, Inverse Fast Fourier Transform, operation on a received OFDM, Orthogonal Frequency Division Multiplexing, signal after LS, Least Square, estimation.

13. The method of one of claims 10 to 12, wherein the standard deviation value is $\hat{\sigma}_{|e|} = \sqrt{E\{|e(n)|^2\} - E^2\{|e(n)|\}}$ ,

where $e(n)$ is the noise component, n is the time index, a range of n is $L \le n \le N$, a range of $L$ is $M \le L \le N$, $M$ is a maximum channel order of a channel capable of being generated, and $N$ is an FFT, Fast Fourier Transform, size.

14. A method for estimating delay spread of a multi-path fading channel in a wireless communication system, comprising:

producing a standard deviation value of a noise component from time-domain signal values obtained from a received signal;
comparing a time-domain signal value in each time index with a threshold value designated by the standard deviation value while decrementing a time index value from a preset time index of time indexes respectively corresponding to sampling points; and
detecting, as a maximum delay spread value, a delay time corresponding to one of the time indexes in which a time-domain signal value equal to or greater than the threshold value appears first.

15. The method of claim 14, wherein the threshold value is proportional to the standard deviation value according to an inverse CDF, Cumulative Distribution Function, of a normal Rayleigh distribution.

16. The method of claim 14 or 15, wherein the preset time index corresponds to a sampling point included in a time domain in which no channel value is present.

17. The method of one of claims 14 to 16, wherein the time-domain signal value is a power value obtained by performing an IFFT, Inverse Fast Fourier Transform, operation on a received OFDM, Orthogonal Frequency Division Multiplexing, signal after LS, Least Square, estimation.

18. The method of one of claims 14 to 17, wherein the standard deviation value is $\hat{\sigma}_{|e|} = \sqrt{E\{|e(n)|^2\} - E^2\{|e(n)|\}}$ ,

where $e(n)$ is the noise component, n is the time index, a range of n is $L \le n \le N$, a range of $L$ is $M \le L \le N$, $M$ is a maximum channel order of a channel capable of being generated, and $N$ is an FFT, Fast Fourier Transform, size.

FIG.1

FIG.2

START

RECEIVE TIME-DOMAIN SIGNAL
VALUES FROM IFFT PART ⎯ 200

CALCULATE

$$\hat{\sigma}_{|e|} = \sqrt{E\{|e(n)|^2\} - E^2\{|e(n)|\}}$$ ⎯ 204

$\check{M} = L$ ⎯ 206

210 ⎯ $\check{M} = \check{M} - 1$ ← NO ⎯ $|\tilde{h}(\check{M})| \geq \kappa_* \hat{\sigma}_{|e|}?$ — 208

YES

DECIDE $\check{M}$ AS $\tilde{M}_{max}$ AND
DETECT DELAY TIME
CORRESPONDING TO $\tilde{M}_{max}$ AS
MAXIMUM DELAY SPREAD VALUE ⎯ 212

END

# FIG.3

FIG.4

EP 1 643 702 A2

FIG.5

FIG.6

FIG.7

FIG.8